(19) Europäisches Patentamt / European Patent Office / Office européen des brevets

(11) **EP 2 890 875 B1**

(12) **FASCICULE DE BREVET EUROPEEN**

(45) Date de publication et mention de la délivrance du brevet:
**21.03.2018 Bulletin 2018/12**

(21) Numéro de dépôt: **13755982.9**

(22) Date de dépôt: **09.08.2013**

(51) Int Cl.:
*F01N 3/20* $^{(2006.01)}$     *F01N 13/16* $^{(2010.01)}$

(86) Numéro de dépôt international:
**PCT/EP2013/066770**

(87) Numéro de publication internationale:
**WO 2014/023841 (13.02.2014 Gazette 2014/07)**

(54) **UNITÉ DE STOCKAGE D'AMMONIAC ET STRUCTURE ET SYSTÈME ASSOCIÉS**

AMMONIAKSPEICHEREINHEIT UND DAMIT VERKNÜPFTE STRUKTUR UND SYSTEM

AMMONIA STORAGE UNIT AND ASSOCIATED STRUCTURE AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.08.2012 EP 12305993**
**31.12.2012 EP 12306714**

(43) Date de publication de la demande:
**08.07.2015 Bulletin 2015/28**

(73) Titulaire: **Aaqius & Aaqius S.A.**
**1207 Genève (CH)**

(72) Inventeurs:
 • **DEMENTHON, Jean-Baptiste**
 **F-75011 Paris (FR)**
 • **LEVY, Michael Francis**
 **F-75015 Paris (FR)**

(74) Mandataire: **Regimbeau**
**20, rue de Chazelles**
**75847 Paris Cedex 17 (FR)**

(56) Documents cités:
**EP-A1- 1 977 817     EP-A1- 2 386 523**
**EP-A1- 2 522 823     WO-A1-2011/038916**

EP 2 890 875 B1

**Description**

**Domaine de l'invention**

L'invention concerne d'une façon générale le stockage de l'ammoniac dans des applications de réduction des oxydes d'azote NOx par réduction catalytique sélective (SCR), notamment pour la réduction des émissions de polluants par les moteurs à combustion interne, en particulier les moteurs diesel.

**Etat de l'art**

Les émissions de polluants liées au transport sont depuis près de trente ans un moteur de progrès de premier plan de l'industrie. L'augmentation progressive de la sévérité des limites en émission pour les quatre polluants réglementés (CO, HC, $NO_x$, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Une diminution de la tolérance vis-à-vis des seuils d'émission Européens est attendue en 2014 dans le cadre des étapes pour l'entrée en vigueur de la norme Euro6. De telles mesures visent à réduire la pollution locale. Disposer de technologies de dépollution à forte efficacité dans toutes les conditions de roulage est ainsi un enjeu majeur pour l'industrie du transport. Dans ce contexte, la réduction des oxydes d'azote ($NO_x$) en mélange pauvre, c'est-à-dire en mélange comprenant de l'oxygène en excès, représente un enjeu important associé à une problématique complexe.

Par ailleurs, la consommation de carburant, en lien direct avec les émissions de $CO_2$, a été propulsée en quelques années au rang de préoccupation majeure de l'automobile. Ainsi, une réglementation a été mise en place au niveau Européen à partir de 2012 sur les émissions de $CO_2$ des véhicules particuliers. Il est d'ores et déjà acquis que cette limite sera régulièrement abaissée au cours des décennies à venir. La réduction des émissions $CO_2$ s'est donc imposée comme le nouveau moteur de croissance pour toute l'industrie des transports.

Cette double problématique réduction de la pollution locale ($NO_x$) et réduction de la consommation carburant ($CO_2$) est particulièrement difficile pour le moteur Diesel dont la combustion en mélange pauvre s'accompagne d'émissions en $NO_x$ difficile à traiter.

Dans ce contexte, la technologie de post-traitement SCR (« selective catalytic réduction », réduction catalytique sélective en terminologie anglo-saxonne) est utilisée aussi bien pour les véhicules particuliers que pour les véhicules affectés au transport de marchandises. Il est alors possible de positionner le moteur sur son fonctionnement optimal en rendement, les fortes émissions de $NO_x$ étant ensuite traitées dans l'échappement par le système SCR permettant une réduction NOx avec une forte efficacité.

Pour permettre la mise en place d'une telle technologie SCR il est nécessaire d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose par effet de la température des gaz d'échappement en ammoniac ($NH_3$) et permet la réduction des $NO_x$ sur un catalyseur spécifique. Une solution aqueuse d'urée retenue et standardisée pour le fonctionnement des systèmes actuellement en série de SCR est référencée en AUS32 (le nom commercial en Europe étant Adblue ®)

Ce procédé très efficace souffre pourtant d'un certain nombre d'inconvénients. Il présente une efficacité à froid limitée, alors qu'une telle situation se présente dans plusieurs cas, notamment celui des bus en ville. Le réservoir d'urée présente une masse et un volume important, typiquement 15 à 30L pour un véhicule particulier, 40 à 80L pour un poids-lourds. Un tel encombrement entraîne une complexité d'intégration dans le véhicule d'autant plus importante que le véhicule est petit. Il en résulte un coût élevé de la dépollution, ainsi qu'un excédent de masse qui se fait au détriment de la consommation en carburant du véhicule et donc des émissions de CO2.

Diverses méthodes alternatives de stockage ont été envisagées. L'option de stocker l'ammoniac sous forme gazeuse sous pression présente de nombreux inconvénients en termes de compacité et de sécurité de fonctionnement.

Une méthode privilégiée consiste en une absorption du gaz à l'intérieur d'un matériau, par exemple un sel, disposé dans une enceinte de stockage. Le stockage d'ammoniac est alors réalisé au sein du sel par la formation de complexe chimique du type ammoniacate. Les avantages de ce type de stockage par rapport à l'urée en solution aqueuse sont nombreux. Le stockage au sein d'un sel permet une réduction de masse et de volume du réservoir de stockage significative. Il permet également un bénéfice en termes de bilan $CO_2$ en raison de la diminution de la masse de réducteur à embarquer pour une autonomie en ammoniac donnée. On économise en effet la quantité d'eau additionnelle prévue pour diluer l'urée dans la configuration classique de la SCR, dite liquide. Par ailleurs, ce type de stockage permet de mettre en oeuvre une absorption de $NO_x$ à froid avec une efficacité plus élevée. Ce type de stockage assure de plus une réduction des coûts de fabrication car le système d'alimentation et injection de l'ammoniac peut être simplifié.

Pour limiter l'encombrement de l'enceinte de stockage, les constructeurs automobiles privilégient un remplissage ou un remplacement de l'enceinte de stockage, par exemple lors de la maintenance moteur, au moment de la vidange, ou lors d'un remplissage réservoir carburant. La quantité d'ammoniac embarquée à bord d'un véhicule particulier sera de l'ordre de 6 kg pour un équivalent 16 L d'une solution d'urée de type AUS32, ce qui permet d'assurer l'autonomie du véhicule particulier entre deux intervalles de vidange du véhicule. Pour permettre l'alimentation du système en ammoniac, il est prévu un élément de chauffage, électrique ou via un fluide caloporteur par exemple, contrôlé de sorte à doser dans chaque condition d'utilisation l'ammoniac destiné au traitement des oxydes d'azote.

Une fois l'enceinte de stockage, par exemple une cartouche, vide, elle est remplacée par une pleine, par exemple lors d'une maintenance de véhicule, la vide étant renvoyée à une centrale de remplissage. Une cartouche pourra ainsi subir de dix à quinze cycles de vidage / remplissage.

En effet, au cours de la réaction d'absorption, la fixation de l'ammoniac gazeux par le sel solide constituant matériau de stockage s'accompagne d'une augmentation de volume, l'ammoniacate occupant alors un volume très supérieur au volume du sel pur. Le volume du sel après absorption peut être jusqu'à quatre à cinq fois plus important que le volume du sel sans ammoniac. L'augmentation de volume du sel est due non seulement à la dilatation du réseau cristallin du matériau mais aussi à son fractionnement laissant ainsi de l'espace libre entre les microcristaux de complexe ammoniacate. Les phases successives de dilatation, contraction de la matrice poreuse peuvent ainsi provoquer localement des phénomènes de frittage ce qui a un effet négatif sur l'homogénéité de la porosité et de manière générale sur la durabilité du matériau. Les documents EP2522823A1 et WO2011/038916A1 décrivent des matériaux de stockage.

## Résumé de l'invention

Un but de l'invention est de proposer une unité de stockage, et une structure et un système associé, qui pallient tout ou partie des inconvénients précités.

Des buts de l'invention sont en particulier de limiter les efforts mécaniques d'expansion exercés sur les parois d'une enceinte de stockage, et de préserver l'intégrité de la structure de stockage, au cours des cycles d'absorption/désorption.

A cet effet, il est proposé une unité de stockage de gaz par absorption ou adsorption, comprenant une enceinte abritant un élément de stockage de gaz par absorption ou adsorption, comprenant en outre un élément compressible également prévu dans l'enceinte et maintenu en contact avec l'élément de stockage et adapté pour se déformer sous l'action d'efforts exercés par l'élément de stockage lors de variations de volume de l'élément de stockage au cours de phases de stockage et déstockage de gaz, de manière à limiter les efforts appliqués sur l'enceinte,

l'unité comprenant une alternance de couches comprenant une couche d'un élément de stockage et au moins une couche d'un élément compressible.

L'invention est avantageusement complétée par les caractéristiques suivantes, prises seules ou selon l'une quelconque de leurs combinaisons techniquement possibles :

* l'élément de stockage est sous forme pulvérulente, compressée ou non compressée ;
* l'élément compressible est constitué un milieu poreux ;
* l'élément compressible comprend une matrice poreuse de graphite naturel expansé ;
* le graphite naturel expansé est pré-comprimé avant mise en place dans l'enceinte ;

* il est prévu une série d'éléments de stockage séparés deux à deux par des éléments compressibles ;

* il est prévu une première combinaison d'un élément de stockage, intégré dans un élément compressible de manière à être entouré par l'élément compressible ;
* il est prévu une deuxième combinaison d'un élément compressible intégré dans un élément de stockage de manière à être entouré par l'élément de stockage ;
* il est prévu une alternance de première(s) combinaison(s) et de deuxième(s) combinaison(s) ;
* il est prévu une série d'éléments de stockage intégrés dans un élément compressible commun ;
* l'élément compressible comprend deux parties, une partie au moins étant maintenue en appui contre un élément de stockage, les deux parties étant interconnectées par un élément mécanique élastique ;
* l'élément mécanique élastique comprend un ressort ;
* l'élément compressible est adapté pour se déformer avec variation de densité sous l'action d'efforts exercés par l'élément de stockage lors de variations de volume de l'élément de stockage au cours de phases de stockage et déstockage de gaz, de manière à limiter les efforts appliqués sur l'enceinte.

L'invention propose également une structure de stockage de gaz par absorption ou adsorption, adaptée pour être disposée dans une enceinte, la structure comprenant un élément de stockage de gaz par absorption ou adsorption, comprenant en outre un élément compressible maintenu en contact avec l'élément de stockage et adapté pour se déformer sous l'action d'efforts exercés par l'élément de stockage lors de variations de volume de l'élément de stockage au cours de phases de stockage et déstockage de gaz, la structure comprenant une alternance de couches comprenant une couche d'un élément de stockage et au moins une couche d'un élément compressible.

L'invention propose également un système de réduction catalytique sélective pour gaz d'échappement de moteur à combustion interne, comprenant une unité de stockage d'ammoniac telle que décrite précédemment, et un module d'injection de l'ammoniac dans les gaz d'échappement.

L'invention propose également un procédé de remplissage d'une unité de stockage de gaz comprenant une enceinte destinée à abriter au moins un élément de stockage de gaz par absorption ou adsorption, comprenant les étapes suivantes :

- placer dans ladite enceinte au moins un élément de stockage de gaz, essentiellement dépourvu de gaz,
- placer dans ladite enceinte, de façon adjacente à l'élément de stockage, au moins un élément compressible,
- fermer l'enceinte et l'appliquer à celle-ci une source de gaz sous pression, pour stocker le gaz par adsorption dans le ou chaque élément de stockage de gaz, le ou chaque élément compressible étant adapté pour se déformer sous l'action d'efforts exercés sur lui du fait des variations de volume du ou de chaque élément de stockage au cours de ce stockage, de manière à limiter les efforts appliqués sur l'enceinte,

l'unité comprenant une alternance de couches comprenant une couche d'un élément de stockage et au moins une couche d'un élément compressible.

L'invention est avantageusement complétée par la caractéristique suivante :

l'élément de stockage est une couche de sel pulvérulente, le procédé comprenant l'introduction du sel pulvérulent dans l'enceinte pour former un couche et une mise en forme de cette couche par un plongeur.

L'invention concerne également un procédé d'obtention d'une structure de stockage d'ammoniac telle que décrite précédemment, le procédé comprenant des étapes consistant à :

- déposer une couche de stockage comprenant un sel non compressé ou préalablement compressé,
- déposer une couche d'un élément compressible,

ces deux étapes étant répétées pour former une structure comprenant une alternance de couches de stockage et de couche(s) de matériau compressible intercalaire(s),

dans lequel la couche de stockage et la couche d'élément compressible sont pré-assemblées, les deux couches étant ensuite déposées simultanément dans l'enceinte.

L'invention est avantageusement complétée par la caractéristique suivante :

le pré-assemblage est réalisé par collage et/ou compression des couches l'une contre l'autre.

## Brève description des figures

D'autres caractéristiques, buts et avantages de l'invention apparaitront lors de la description ci-après d'un mode de réalisation. Aux dessins annexés :

- la figure 1 représente un moteur thermique équipé d'un système de post-traitement SCR par injection d'ammoniac selon un mode de réalisation de l'invention ;
- la figure 2a représente une matrice de stockage constituée de plusieurs éléments de stockage intercalés de plusieurs éléments compressibles d'absorption d'expansion , la matrice de stockage étant vide d'ammoniac ;
- la figure 2b représente la matrice de stockage de la figure 2a après remplissage par de l'ammoniac ;
- les figures 3a et 3b représentent l'effet d'expansion obtenu lors du chargement de la structure de stockage par un gaz (exemple l'ammoniac) sur les éléments compressibles et les parois d'enceinte de stockage.
- les figures 4a à 4c représentent différentes variantes d'éléments compressibles ;
- les figures 5a à 5c représentent des alternatives d'associations entre éléments absorbeurs de gaz et éléments compressibles à effet amortisseur (« damper » en terminologie anglo-saxonne) ;
- les figures 6a à 6h représentent un procédé de réalisation de la structure de stockage selon un mode de réalisation de l'invention ;
- la figure 7 représente une partie d'une structure de stockage, présentent un jeu ; et
- le tableau 1 représente le ratio d'expansion théorique de complexes ammoniacates.

**Description détaillée de l'invention**

**1) Propriétés connues de la chemisorption d'ammoniac dans les sels**

a) *Réaction*

Dans une structure de stockage, un sel pulvérulent est choisi parmi les chlorures d'alcalino-terreux. En particulier, le sel pulvérulent est choisi parmi les composés suivants : $SrCl_2$, $MgCl_2$, $BaCl_2$, $CaCl_2$, $NaCl_2$. Le stockage d'ammoniac repose par ailleurs sur une réaction réversible solide - gaz du type :

$$< \text{Solide A} > \ + \ (\text{Gaz}) \ \rightleftarrows \ < \text{Solide B} >$$

L'ammoniac forme avec les chlorures d'alcalino-terreux des complexes de coordination aussi appelés ammoniacates. Ce phénomène est connu de l'homme du métier.
Par exemple, les réactions de l'ammoniac avec le chlorure de strontium sont :

$$SrCl_2 \ (s) \ + \ NH_3 \ (g) \ \rightleftarrows \ Sr(NH_3)Cl_2 \ (s)$$

$$Sr(NH_3)Cl_2 \ (s) \ + \ 7\,NH_3 \ (g) \ \rightleftarrows \ Sr(NH_3)_8Cl_2 \ (s)$$

De même l'unique réaction de l'ammoniac avec le chlorure de barium est :

$$BaCl_2 \ (s) \ + \ 8\,NH_3 \ (g) \ \rightleftarrows \ Ba(NH_3)_8Cl_2 \ (s)$$

L'absorption chimique du ligand ammoniac par l'absorbant $SrCl_2$ et $BaCl_2$ entraîne, entre le solide et le gaz, un transfert d'électrons qui se traduit par des liaisons chimiques entre $NH_3$ et la couche externe des atomes de $SrCl_2$ et $BaCl_2$. La pénétration du gaz dans la structure du solide se faisant dans la totalité de sa masse par un processus de diffusion. Cette réaction est parfaitement réversible, l'absorption étant exothermique et la désorption endothermique.

b) *Dilatation*

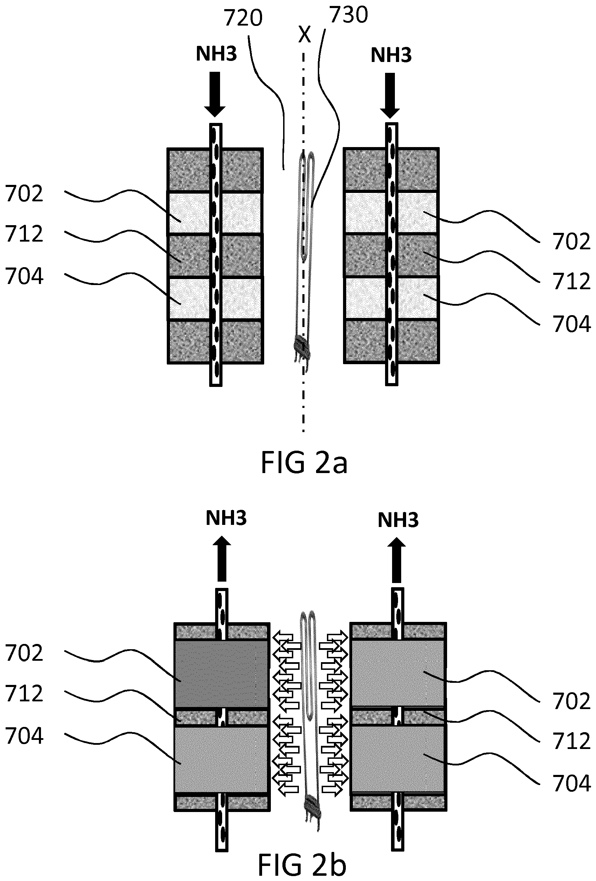

En référence aux figures 2a à 2d, la dilatation résultant du phénomène d'absorption dans le cas du sel chlorure de magnésium est décrit. La figure 2a représente la structure cristalline d'une couche de sel de $MgCl_2$. La figure 2b représente une molécule d'ammoniac.
Les réactions de l'ammoniac avec le chlorure de magnésium sont de la forme :

$$MgCl_2 \ (s) \ + \ nNH_3 \ (g) \ \rightleftarrows \ MgCl_2(NH_3)_n \ (s)$$

Où n peut valoir 2 ou 6. Ainsi la figure 2c représente la structure cristalline du $MgCl_2(NH_3)_2$ et la figure 2d la structure cristalline du $MgCl_2(NH_3)_6$.
En référence à la table 1, il est indiqué le facteur de dilatation théorique entre différents sels pur et leurs complexes purs associés. Cette valeur correspond uniquement à la dilatation du réseau cristallin, n'intègre par la dilatation du au fractionnement entre les microcristaux. Les valeurs d'enthalpie d'absorption à l'équilibre à pression de vapeur basse.

**Tableau 1**

| Formule moléculaire | Masse moléculaire (g/mol) | Densité (kg/L) | Facteur de dilatation | Enthalpie d'absorption (kJ/mol) | Entropie d'absorption (J/mol.K) |
|---|---|---|---|---|---|
| $(NH_2)_2CO^+H2O$ | N/A | 1,086 | | 0,184 | 0,2 |
| $MgCl_2$ | 95,21 | 2,32 | | | |

(suite)

| Formule moléculaire | Masse moléculaire (g/mol) | Densité (kg/L) | Facteur de dilatation | Enthalpie d'absorption (kJ/mol) | Entropie d'absorption (J/mol.K) |
|---|---|---|---|---|---|
| $Mg(NH_3)_6Cl_2$ | 197,39 | 1,16 | 2 | 55,7 | 230 |
| $SrCl_2$ | 158,53 | 3,05 | | | |
| $Sr(NH_3)_8Cl_2$ | 294,77 | 1,3 | 2,35 | 38,7 | 230 |
| $BaCl_2$ | 208,23 | 3,85 | | | |
| $Ba(NH_3)_8Cl_2$ | 344,37 | 1,7 | 2,26 | 41,4 | 230 |
| $NH_3$ | 17,03 | 0,61 | | | |

*c) Conditions sur la structure de stockage*

Une structure de stockage d'ammoniac doit pouvoir assurer plusieurs cycles de remplissage/vidage au cours de la vie du véhicule auquel elle est associée. Ces cycles de vidage/remplissage donnent lieu à des changements de phase de l'ammoniac. Le vidage sera provoqué par élévation de température de la structure, le remplissage quant à lui est assuré après connexion d'une enceinte 8 à un circuit d'alimentation 200 d'ammoniac sous pression et via un dispositif de refroidissement de l'ensemble, destiné à évacuer les calories dégagées lors du changement de phase de l'ammoniac.
Dans le cas d'une absorption du gaz dans un sel pulvérulent, le gaz diffuse au travers du milieu poreux de sel de la structure de stockage, depuis le grain de sel vers la sortie de l'enceinte, par exemple une cartouche, permettant la mise à disposition de l'ammoniac à injecter à l'échappement.
Lors de la phase de conditionnement et de reconditionnement de l'enceinte, l'ammoniac est réintroduit dans le système, diffuse au sein du milieu poreux créé par le sel pulvérulent et s'absorbe au sein des grains de sel. Le cycle de ces transformations dans le temps, ou respiration du matériau, doit pouvoir se faire sans détérioration de la capacité de stockage et avec des durées raisonnables. Des gradients de compression hétérogènes dans le sel et des mécanismes de frittage peuvent en effet détériorer la structure de stockage.

*d) Additifs*

Il est parfois décrit l'ajout d'additif en poudre à un sel, pour améliorer la conductivité thermique et rendre la structure de stockage plus robuste, c'est-à-dire plus apte à se remplir. L'ajout de divers additifs a été envisagé dans l'état de l'art.
L'additif peut comprendre du graphite naturel expansé qui peut ainsi être ajouté au sel avant d'être mis en forme.
L'additif peut comprendre une poudre de métal, par exemple une poudre d'aluminium.

*e) Mise en oeuvre d'un système de désorption de gaz à partir de la matrice de stockage*

La réalisation *in fine* d'un système utilisant une matrice de stockage de gaz, par exemple de l'ammoniac, implique l'intégration de la matrice et de son stock d'ammoniac à l'intérieur d'une enceinte de stockage. L'état de l'art en matière d'utilisation de stockage solide d'ammoniac pour la dépollution deNOx, consiste à intégrer l'ammoniac par lit fluidisé au matériau de stockage, le matériau de stockage étant par exemple un sel, puis de compresser ledit matériau sous forme de galettes préformées prêtes à être empilées à l'intérieur de l'enceinte de stockage.
On peut alors intégrer un dispositif de chauffage de l'ensemble, par exemple une résistance électrique, par exemple sous forme de couverture chauffante entourant l'enceinte de stockage, ledit dispositif de chauffage étant actionné selon une consigne lorsqu'une pression de gaz est requise. Dans le cas d'un tel système appliqué à la DeNOx SCR (réduction catalytique sélective) solide, le chauffage est actionné selon un algorithme hébergé dans un calculateur qui en assure le contrôle, par exemple l'ECU moteur (bloc de contrôle électronique, « Electronic Control Unit » en terminologie anglo-saxonne), de manière à ce que le système génère un débit d'ammoniac gazeux en quantité stoechiométrique vis-à-vis de la quantité de NOx générée à l'échappement.
Au cours des phases d'utilisation d'un véhicule équipé d'un tel système, le système va se vider progressivement de l'ammoniac stocké en fonction des émissions de NOx du véhicule. Une fois vide, le système devra être rechargé en ammoniac, par exemple à l'occasion d'une opération de maintenance. En raisons des contraintes de taille de l'enceinte de stockage, ce cycle de vidage/remplissage sera généralement amené à se produire plusieurs fois dans la vie d'un même véhicule.

Dans la pratique, l'état de l'art rapporte que la matrice de stockage peut être dimensionnée de manière à pouvoir, une fois saturée, contenir la quantité d'ammoniac nécessaire pour traiter les d'oxyde d'azote totales émises entre deux intervalles de vidange du véhicule (20 000km à 30 000km selon les constructeurs). Si l'on admet une durée de vie de 250 000 km pour le véhicule, il apparaît que le nombre moyen de vidage(s)/remplissage(s) du système avoisine dix.

Un souci d'encombrement minimal du système incite à maximiser la compression de la matrice de stockage ce qui minimise le volume de vide en son sein. Des densités, mesurant le ratio entre masse d'ammoniac et volume occupé par la matrice de stockage, comprises entre 0,4 et 0,5 sont souvent mentionnées.

Plus la densité obtenue est élevée et plus le volume d'encombrement sera faible, d'où une plus grande facilité d'intégration sur véhicule, mais l'augmentation de la densité s'accompagne aussi de plusieurs difficultés :

- une plus grande difficulté à désorber l'ammoniac (puissance électrique consommée plus importante, durée de maintien d'un débit de gaz donné limitée par le temps de diffusion du gaz depuis le sein de la matrice de stockage vers la sortie de l'enceinte de stockage) ;
- une plus grande difficulté à remplir l'enceinte de stockage (la compression du matériau rend plus difficile la diffusion de l'ammoniac depuis les espace libres jusqu'au sein de la matrice poreuse), ce qui rend l'opération de maintenance périodique du système (par exemple le remplissage) plus longue et donc plus complexe et onéreuse ;
- par ailleurs, plus la compression de la matrice de stockage sera élevée à l'intérieur de l'enceinte de stockage, et plus la contrainte exercée par le matériau chargé sur les parois de l'enceinte de stockage sera importante, ce qui a des répercussions sur le matériau utilisé et son épaisseur et donc sa masse ;
- une telle mise en oeuvre par compression de matériau de stockage préalablement saturé en ammoniac, peut conduire à des déficits de durabilité au cours des cycles successifs de sorption / désorption du fait de l'attrition ou l'agglomération de la matière stockante.

La présente invention a pour but de pallier ces différentes difficultés, en réalisant le remplissage de l'ammoniac ultérieurement, par une unité de stockage et une structure de stockage de gaz par absorption ou adsorption à l'intérieur d'un élément de stockage solide non ou faiblement compressé, l'élément de stockage jouxtant un élément compressible, dit amortisseur (« damper » en terminologie anglo-saxonne), adapté pour absorber l'augmentation de volume liée à l'absorption du gaz, par exemple d'ammoniac, par une variation de son propre volume.

A cet égard, le document EP2522823 décrit un dispositif de mesure de la quantité d'ammoniac dans lequel une plaque est sollicitée par les variations de volume du matériau de stockage (qui dépend de la quantité d'ammoniac instantanée dans le matériau) et sollicite à son tour un capteur piézoélectrique, pour déterminer la quantité d'ammoniac disponible. Toutefois, il n'existe dans cette configuration aucun élément d'amortissement susceptible de voir son propre volume varier, et aucune fonction d'amortissement correspondante n'est donc réalisée.

Typiquement, l'élément compressible est adapté pour se déformer de manière élastique. Il lui est ainsi possible de reprendre sa forme suite aux chargement et déchargement d'ammoniac successifs.

Dans une forme de réalisation, l'élément compressible est adapté pour se déformer par variation de densité.

Par absorption du gaz, on entend par exemple que les molécules de gaz s'insèrent à l'intérieur du cristal propre à l'élément de stockage. Par adsorption on entend par exemple que les molécules de gaz forment des liaisons de surface de type Van der Waals avec l'élément de stockage L'élément compressible est en contact avec l'élément de stockage et est adapté pour se déformer sous l'action d'efforts exercés par l'élément de stockage lors de variations de volume de l'élément de stockage au cours de phases de stockage et déstockage de gaz, de manière à limiter les efforts appliqués sur une enceinte entourant la structure.

L'élément compressible est par exemple adapté pour se déformer élastiquement. L'élément compressible peut être adapté pour se déformer en partie de manière élastique.

L'association de ces deux éléments au moins permet à la structure de respirer, de minimiser les temps de libération et de remplissage en ammoniac, d'apporter une plus grande souplesse dans le choix des matériaux et design de d'enceinte de stockage, d'augmenter le nombre de cycles de vidage/remplissage possibles en préservant la durabilité de l'ensemble, d'une manière générale en offrant une très grande flexibilité de conception du système vis-à-vis des contraintes applicatives rencontrées.

L'élément de stockage permet un stockage par absorption ou par adsorption.

Par structure de stockage on entend un ensemble comprenant un matériau de stockage, l'ensemble étant adapté pour être placé dans une enceinte de stockage.

2) Structure illustrant un mode de réalisation de l'invention

La structure de stockage décrite ci-après permet d'éviter les difficultés liées à un stockage dans une structure constituée uniquement de sel, sous forme de galettes compressées après saturation en ammoniac et avant intégration dans une enceinte de stockage pour former une unité de stockage.

Une telle structure de stockage d'ammoniac comprend au moins un élément de stockage, par exemple au moins une couche, par exemple au moins deux couches, chacune formant un élément de stockage, chaque couche comprenant par exemple un sel, par exemple un sel pulvérulent, sous forme compressée ou non compressée, adapté pour stocker et déstocker de l'ammoniac, le sel pouvant être compressé ou non au préalable.

Les deux couches de stockage au moins sont par exemple séparées l'une de l'autre par au moins un élément compressible. Cette alternance d'éléments de stockage et d'éléments compressibles permet de limiter pour chacune des couches de stockage les efforts appliqués à l'enceinte.

De plus, il est ainsi possible d'obtenir une structure globalement équilibrée car les éléments compressibles ne sont pas isolés de la partie de la structure formant l'élément de stockage. Cette structure se comporte ainsi dans son ensemble comme une structure de stockage et non comme deux structures distinctes.

Les deux couches de sel au moins sont par exemple séparées l'une de l'autre par au moins un élément compressible, présentant par exemple un effet amortisseur (« damper » en terminologie anglo-saxonne), permettant d'absorber les dilatations et rétractions des éléments de stockage, lesquelles sont fonction de la quantité d'ammoniac stockée dans la structure.

L'élément de stockage et l'élément compressible sont ici présentés à titre d'exemple indicatif sous forme de couches. D'autres formes d'éléments sont cependant envisageables par l'homme du métier.

L'élément de stockage comprend par exemple un matériau de stockage sélectionné parmi un complexe de sel de métal amine de formule $Ma(NH_3)nX_z$, où :

- M est au moins un cation sélectionné parmi les métaux alcalins tels que Li, Na, K ou Cs, métaux alcalino-terreux tels que Mg, Ca, Sr, ou Ba, et/ou des métaux de transition tels que V, Cr, Mn, Fe, Co, Ni, Cu, ou Zn ou une combinaison des éléments précédents, tels que NaAl, KAl, K2Zn, CsCu, ou K2Fe,
- X est un pour plusieurs anions sélectionnés parmi ions fluorure, chlorure, bromure, iodure, nitrate, thiocyanate, sulfate, molybdate et phosphate ;
- a est un nombre de cations par molécule de sel, et
- n est un nombre de coordination compris entre 2 et 12, de préférence compris entre 6 et 8.

Le sel, par exemple pulvérulent, peut être choisi parmi les chlorures d'alcalino-terreux. En particulier, le sel peut comprendre ou être constitué des composés suivants : $SrCl_2$, $MgCl_2$, $BaCl_2$, $CaCl_2$, $NaCl_2$. Chaque couche de sel formant élément de stockage peut comprendre préférentiellement des grains de sel dont la granulométrie est comprise entre 1 et 1000 $\mu$m. Préférentiellement, la masse de matériau compressible peut constituer entre 1% et 30% de la masse de sel.

Chaque couche de sel formant élément de stockage, peut avoir la densité de la poudre du même sel sans compression. Chaque couche de sel formant élément de stockage peut être compressée. Chaque couche de sel formant élément de stockage peut être sous forme d'un bloc rigide. Chaque couche de sel formant élément de stockage peut contenir une proportion de matériau thermiquement conducteur en son sein, matériau conducteur tel que du graphite naturel expansé ou une poudre métallique, par exemple.

L'élément de stockage peut être réalisé en un sel pulvérulent compressé, par exemple préalablement compressé ou compressé lors de l'obtention de la structure de stockage. Alternativement, l'élément de stockage peut être réalisée en un sel pulvérulent non compressé.

L'élément de stockage peut être un élément rigide. Par élément rigide on entend élément qu'on ne peut essentiellement pas déformer. Alternativement l'élément de stockage peut ne pas être un élément rigide, par exemple une poudre d'un sel non compressé ou un élément plus aisément déformable.

L'élément compressible est par exemple constitué d'un milieu poreux. L'élément compressible comprend par exemple une matrice poreuse de graphite naturel expansé.

L'élément compressible peut par exemple comprendre ou être constitué d'au moins une couche de graphite naturel expansé préalablement compressé ou pré-comprimé, avant mise en place dans l'enceinte, à une valeur intermédiaire entre sa densité libre et la densité du squelette de graphite qui le constitue. Par exemple, un graphite naturel expansé peut présenter une valeur de densité libre cent fois plus faible que la valeur de densité du squelette de graphite qui le constitue.

Par compression avant intégration dans le système, on pourra également, toujours à titre d'exemple, dimensionner des éléments de graphite à une densité dix fois inférieur à la densité dudit squelette.

Le taux de compressibilité de l'élément compressible est par exemple supérieur ou égal au taux d'expansion, en l'absence de contrainte, de l'élément de stockage de gaz entre un état libre de tout gaz et un état de saturation en gaz. Le taux de compressibilité de l'élément compressible peut par exemple être supérieur ou égal à une fraction de ce taux d'expansion. De cette manière, une partie des efforts résultants de l'augmentation de volume de l'élément de stockage sont absorbés par l'élément compressible.

La valeur du taux de compressibilité de l'élément compressible peut être définie en fonction de l'enceinte dans laquelle il est destiné à être intégré. Ainsi une enceinte de stockage en métal, typiquement en acier inoxydable, offre une importante capacité d'absorption des efforts et un taux de compressibilité de 50% ou inférieur à 50% pourra être choisi. L'enceinte de stockage peut également être réalisée en matière plastique, en matériau composite comprenant par exemple de la fibre de carbone.

Des hybrides de ces matériaux peuvent également être envisagés, tel qu'une structure de base fine en métal renforcée par une matrice en matériau composite. La structure peut comprendre une alternance de couches comprenant un élément de stockage et de couches comprenant un élément compressible.

Selon un autre exemple, la structure peut en particulier comprendre une série d'éléments de stockage séparés deux à deux par des éléments compressibles.

Le système peut comprendre une telle organisation d'éléments présentant un empilement ou une juxtaposition d'éléments de stockage et d'éléments compressibles aux formes diverses.

Par exemple, on pourra réaliser une alternance de disques d'éléments de stockage et d'éléments compressibles, dans une enceinte par exemple à symétrie de révolution.

Il est également possible de réaliser une structure comprenant des couches intercalaires présentant à chaque étage une combinaison d'élément de stockage et d'élément compressible.

En outre, la structure de stockage peut prendre la forme d'une succession d'éléments absorbants et d'éléments compressibles de forme cylindriques.

Dans le cas d'un empilement de couches alternées, le nombre de couches intercalaires d'éléments absorbeurs peut être préférentiellement compris entre 1 et 30.

La structure peut être intégrée à un dispositif où le sel pulvérulent non compressé emplit un espace laissé libre par au moins un élément compressible formant une structure de matériau absorbeur de dilatation de forme quelconque intégré à l'intérieur du volume de l'enceinte de stockage.

Pour une application donnée, la présente invention permet une très grande flexibilité de conception, en terme de ratio entre masse de matériau absorbant et masse du ou de chaque élément compressible, de la taille, de la forme et de la densité du ou de chaque élément compressible et du ou de chaque élément de stockage.

Pour une application donnée, la présente invention permet également une très grande flexibilité de conception pour le matériau de l'enceinte de stockage, qui peut comprendre par exemple du métal, un plastique ou un ensemble de plastiques, un ou plusieurs composites, voire une hybridation de ces matériaux.

La hauteur de l'ensemble des couches en un matériau de stockage est typiquement comprise entre 25% et 75% de la hauteur de l'ensemble des éléments compressibles ou couches comprenant un élément compressible, de préférence entre 50% et 75%, en fonction du gonflement du matériau de stockage.

En particulier, la hauteur de chaque couche en un matériau de stockage est typiquement comprise entre 25% et 75%, plus préférentiellement entre de préférence entre 50% et 75%, de la hauteur de chaque élément compressible ou couche comprenant un élément compressible.

De tels intervalles sont particulièrement adaptés au cas où le matériau de stockage comprend un sel d'alcalino-terreux et où l'élément compressible comprend du graphite naturel expansé, en particulier dans le cas où le sel d'alcalino-terreux est du chlorure de strontium ou du chlorure de baryum.

La structure de stockage est ou est destinée à être disposée à l'intérieur d'une enceinte.

En cours de fonctionnement d'un système comprenant cette structure de stockage dans une enceinte, de l'ammoniac gazeux sous pression dans l'enceinte.

Lorsque la structure de stockage n'est pas saturée, les grains de sel du ou de chaque élément de stockage absorbent l'ammoniac. Il est ainsi possible de remplir au moins partiellement la ou chaque couche de stockage en gaz avec cet ammoniac.

Par chauffage de l'élément de stockage, on peut ensuite obtenir la libération de l'ammoniac absorbé pour l'extraire de l'enceinte.

Les couches en un matériau de stockage et les couches en un matériau compressible peuvent avoir des formes variées, en particulier des sections de formes variées.

Les couches ont par exemple sensiblement la même forme que l'enceinte dans laquelle elles doivent être placées ou sont placées.

Les couches peuvent typiquement présenter une forme sensiblement cylindrique de section ronde, ou ovale, ou arrondie ou encore rectangulaire ou parallélépipédique.

3) Exemple illustrant un mode de réalisation de système de post-traitement SCR

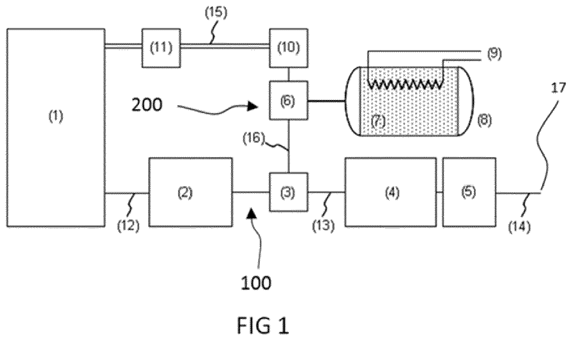

Sur la figure 1, on a représenté schématiquement un moteur thermique équipé d'un système de réduction catalytique sélective pour gaz d'échappement de moteur à combustion interne, par exemple un système de post-traitement SCR par injection d'ammoniac. Le moteur thermique peut être un moteur à combustion interne, par exemple un moteur diesel, ou un moteur essence à mélange pauvre tel qu'un moteur à injection directe à mélange stratifié.

Un moteur 1 est piloté par un calculateur électronique 11. En sortie du moteur, des gaz d'échappement 12 sont dirigés vers un système de dépollution 2. Le système de dépollution 2 peut comprendre un catalyseur d'oxydation ou un catalyseur à trois voies. Le système de dépollution peut en outre comprendre un filtre à particules.

De l'ammoniac 16 est injecté au niveau d'un circuit d'échappement 100 du moteur et mélangé aux gaz d'échappement au moyen d'un module d'injection 3 disposé par exemple en aval de l'élément de dépollution 2 pour former un mélange ammoniac / gaz d'échappement 13. Le mélange ammoniac / gaz d'échappement 13 traverse ensuite un catalyseur SCR 4 qui permet la réduction des NOx par l'ammoniac. Des éléments complémentaires de post-traitement 5 peuvent être positionnés après le catalyseur SCR. Les éléments complémentaires 5 peuvent comprendre un filtre à particules ou un catalyseur d'oxydation. Les gaz d'échappement se présentent ainsi sous une forme de gaz d'échappement dépollués 14 en sortie des éléments complémentaires 5. Les gaz d'échappement dépollués sont ensuite dirigés vers une sortie d'échappement 17. Ainsi l'échappement 100 comprend, disposés de l'amont, côté moteur 1, à l'aval, côté sortie 17, l'élément de dépollution 2, le module d'injection 3, le catalyseur SCR 4, et les éléments complémentaires 5.

Pour assurer une alimentation et un dosage de l'ammoniac 16 en entrée du module d'injection 3, le système comprend une unité de stockage comprenant une enceinte de stockage d'ammoniac 8 contenant par exemple une structure de stockage 7 pouvant être pilotée en température par un dispositif de chauffage 9. Le dispositif de chauffage 9 comprend par exemple une résistance électrique ou un échangeur de chaleur alimenté par un fluide caloporteur tel que le liquide de refroidissement moteur.

Le dispositif de chauffage 9 permet par exemple de fournir de la chaleur directement à l'intérieur de l'enceinte 8. Alternativement, le dispositif de chauffage 9 permet par exemple de transmettre de la chaleur depuis l'extérieur de l'enceinte 8 vers l'intérieur de l'enceinte 8.

En particulier, le dispositif de chauffage 9 permet de fournir de la chaleur à la structure de stockage 7.

La structure 7 peut comprendre des canaux d'acheminement d'ammoniac de l'extérieur de l'enceinte de stockage 8 vers les couches de sel et/ou dans le sens inverse.

L'enceinte de stockage 8 est par exemple connectée à un dispositif 6 de contrôle en pression de l'enceinte et de dosage de l'ammoniac vers le module d'injection 3. Ce dispositif 6 peut être piloté par un contrôleur électronique dédié 10 relié au calculateur électronique 11 du moteur.

Le système comprend ainsi un circuit d'alimentation en ammoniac 200 comprenant, d'amont en aval dans le sens de circulation de l'ammoniac, l'enceinte de stockage 8, le dispositif 6, et le module d'injection 3 dans l'échappement 100.

Dans une configuration alternative (non représentée), le dispositif 6 peut être directement piloté par le calculateur moteur 11.

La structure de stockage 7 est décrite plus précisément aux figures 2a et 2b. La structure de stockage 7 comprend au moins un élément de stockage comprenant une couche de sel pulvérulent, par exemple au moins une première couche de stockage 702 en sel pulvérulent et une deuxième couche de stockage 704 en sel pulvérulent.

Les deux couches de sel pulvérulent au moins prévues sont séparées les unes des autres par au moins une couche compressible, par exemple en un matériau damper, afin d'orienter et de limiter une déformation de la structure lors de stockage et de déstockage de l'ammoniac.

On entend par matériau damper, un matériau qui, au contact d'un matériau susceptible de se dilater possède la propriété de pouvoir se contracter. Ainsi la première couche de stockage 702 et la deuxième couche de stockage 704 sont séparées l'une de l'autre par une couche compressible 712.

Les éléments de la structure de stockage, par exemple formés de couches, peuvent présenter une symétrie de révolution de même axe X. La structure peut alors présenter un évidement le long de l'axe de symétrie de révolution pour permettre le stockage et/ou le déstockage d'ammoniac au niveau de chaque élément de stockage.

La figure 2a représente une structure de stockage comprenant un empilement successif d'éléments de stockage d'ammoniac et d'éléments compressibles avant intégration d'ammoniac. Dans cette configuration particulière, les divers éléments ont une symétrie de révolution, des épaisseurs constantes, ils sont troués en leur centre pour laisser la place à un conduit 722 dans lequel est inséré un élément chauffant 730. L'élement chauffant peut par exemple être une résistance, ou un conduit à l'intérieur duquel circule un liquide caloporteur.

Par ailleurs des diffuseurs présentant des conduits métalliques percés de trous sont disposés de telle sorte à traverser la structure de stockage, par exemple selon un axe parallèle à l'axe X. Les diffuseurs sont adaptés pour amener de l'ammoniac depuis l'extérieur de l'enceinte de stockage vers le matériau de stockage des éléments de stockage. Les diffuseurs peuvent également être utilisés pour acheminer l'ammoniac depuis la structure de stockage ou une matrice de stockage de la structure de stockage vers l'extérieur en cours de fonctionnement du système.

La figure 2b représente schématiquement la même structure de stockage, après que de l'ammoniac a saturé tout ou partie du matériau de stockage, on voit alors l'expansion du ou de chaque élément de stockage de l'ammoniac, au détriment du ou de chaque élément compressible qui se comprime alors, évitant ainsi, d'une part, que tout ou partie de l'effort consécutif au chargement en ammoniac ne s'applique sur les parois de l'ensemble de stockage.

Une telle structure de stockage permet une plus grande flexibilité de design de l'enceinte de stockage.

Une telle structure de stockage permet d'éviter que le chargement en ammoniac ne conduise à une destruction de la macro-porosité du matériau de stockage du ou de chaque élément de stockage. La macro-porosité est en effet un facteur clé d'une mise à disposition ou d'un remplissage rapide et efficace de l'ammoniac au cours du cycle de respiration de la structure de stockage, c'est-à-dire le cycle comprenant le remplissage et le vidage successifs de la structure de stockage. Il est ainsi possible d'obtenir une structure de stockage présentant une matrice respirante, intègre dans le temps.

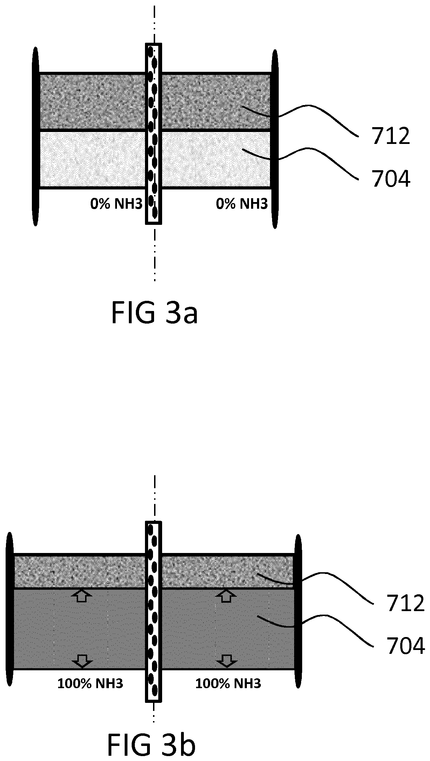

Les figures 3a et 3b illustrent schématiquement un détail de la même structure de stockage soumise au même phénomène de sorte à mettre en évidence l'impact du système de stockage d'ammoniac sur l'effort de dilatation sur la paroi de l'enceinte de stockage.

L'expansion d'un élément de stockage tel que la couche de stockage 704 provoque ainsi la compression de l'élément compressible tel que la couche compressible 712, qui absorbe une partie ou la totalité de l'effort résultant de l'expansion de l'élément de stockage. Il ainsi possible de diminuer fortement l'effort appliqué par l'élément de stockage sur la paroi latérale de l'enceinte de stockage. Dans le cas d'un matériau ayant une faible résistance aux efforts de dilatation, il est possible de dimensionner la succession d'éléments de sorte à ce que l'intégralité de la dilatation de l'élément stockeur soit absorbée par la compression des éléments compressibles. Cette situation pourra avoir l'avantage d'utiliser des matériaux moins onéreux, mais pourra augmenter l'encombrement total du système. Il est ainsi possible de définir un compromis entre l'encombrement et la nature du matériau constitutif de l'enceinte de stockage.

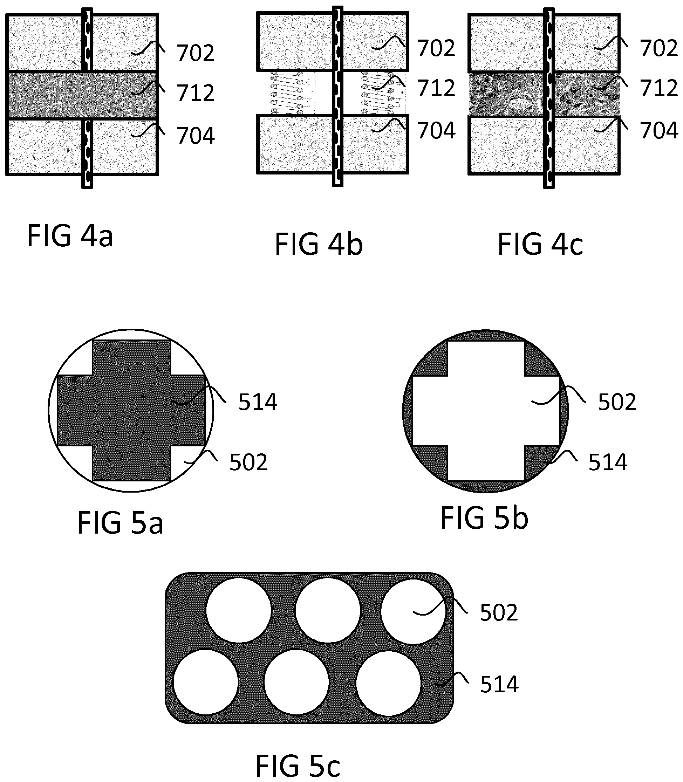

Les figures 4a à 4c illustrent des philosophies alternatives d'éléments compressibles.

La figure 4a représente ainsi un élément compressible comprenant une couche de graphite naturel expansé partiellement pré-compressé.

La figure 4b représente un élément compressible comprenant des plaques, par exemple deux plaques, par exemple métalliques. Une plaque au moins est maintenue en appui contre l'élément compressible. Les deux plaques sont connectées et/ou séparées par des moyens mécaniques, par exemple au moins un élément mécanique élastique tel qu'un ressort ou une pluralité de ressorts. Un tel élément compressible présente une grande simplicité dans sa mise en oeuvre, et permet une réversibilité contrôlée des cycles de dilatation / compression de la structure.

La figure 4c représente un élément compressible comprenant des mousses ou feutres, par exemple dans des matériaux souples comme par exemple des pailles métallique, des mousses de nickel ou tout autre matériau connu de l'homme du métier.

Les figures 5a à 5c illustrent d'autres modes de réalisation d'association entre élément de stockage 502 et élément compressible 514.

La structure de stockage peut comprendre une alternance de couches comprenant une couche d'élément de stockage et au moins une couche d'un élément compressible.

La structure peut ainsi comprendre une pluralité de couches d'éléments de stockage, au moins une de ces couches intégrant en outre un élément compressible.

L'élément compressible peut être adapté pour être maintenu en contact au moins avec l'élément de stockage de la même couche, et adapté pour se déformer sous l'action des efforts exercés par l'élément de stockage de manière à limiter les efforts appliqués sur l'enceinte.

Le volume de l'ensemble des éléments de stockage est typiquement compris entre 25% et 75%, plus préférentiellement par exemple entre 50% et 75%, du volume de l'ensemble des éléments compressibles, en fonction du gonflement du matériau de stockage.

En particulier, pour chaque couche en un matériau de stockage et comprenant un élément compressible, le volume d'élément de stockage est typiquement compris entre 25% et 75%, plus préférentiellement par exemple entre 50% et 75%, du volume d'élément compressible.

De tels intervalles sont particulièrement adaptés au cas où le matériau de stockage comprend un sel d'alcalino-terreux et où le matériau compressible comprend du graphite naturel expansé, en particulier dans le cas où le sel d'alcalino-terreux est du chlorure de strontium ou du chlorure de baryum.

La structure de stockage peut comprendre une première combinaison d'un élément de stockage intégré dans un élément compressible de manière à être entouré par l'élément compressible.

La structure de stockage peut comprendre une deuxième combinaison d'un élément compressible intégré dans un élément de stockage de manière à être entouré par l'élément de stockage.

La structure de stockage peut ainsi comprendre une alternance de première combinaison et de deuxième combinaison, tel que représenté aux figures 5a et 5b.

Les figures 5a et 5b représentent des vues d'une même matrice de forme cylindriques selon 2 plans de coupe différent montrant une répartition variable entre élément de stockage 502 et élément compressible 514 en fonction de la hauteur. Les plans de coupe correspondant aux deux figures sont par exemple parallèles, la figure 5a représentant une coupe d'une première couche de forme sensiblement circulaire dans laquelle l'élément compressible 514 présente une surface cruciforme intérieure à la couche, l'élément de stockage 502 occupant la zone périphérique entre l'élément compressible 512 et la bordure circulaire de la couche. La figure 5b représente une coupe d'une deuxième couche dans laquelle les surfaces occupées par l'élément de stockage 502 et l'élément compressible 512 sont inversées par rapport à la première couche.

La structure de stockage peut comprendre une série d'éléments de stockage intégrés dans un élément compressible commun.

Ainsi la figure 5c représente une enceinte de stockage de forme non cylindrique, typiquement de forme sensiblement rectangulaire, aisément intégrable sur un véhicule. Les éléments de stockage 504 de l'ammoniac sont intégrés longitudinalement dans l'enceinte de stockage, à l'intérieur d'une structure formant élément compressible 514 permettant l'amortissement de la dilatation, facilitant ainsi l'utilisation d'une enceinte de stockage de forme non cylindrique, pour diminuer encore la sensibilité aux surpressions de gaz ou au déformations par dilatation.

Cet élément compressible commun peut former une couche appartenant à une pluralité de couches formant une structure de stockage selon l'invention.

4) Procédés associés

*Premier exemple*

Un exemple de procédé d'obtention d'une telle structure de stockage de gaz ou d'une telle unité de stockage, comprend des étapes consistant à :

- déposer une élément de stockage comprenant un sel non compressé ou préalablement compressé,
- déposer élément en un matériau compressible.

Ces deux étapes sont répétées alternativement pour former une structure comprenant une série d'éléments de stockage et de couches compressibles intercalaires, maintenues en contact avec les couches de stockage.

Dans le cadre d'un procédé d'obtention d'une unité de stockage, ces étapes peuvent être compléter d'une ou de plusieurs étapes consistant à placer les éléments ou la structure obtenue dans une enceinte de stockage.

Les éléments compressibles sont adaptés pour se déformer sous l'action d'efforts exercés par les éléments de stockage, limitant et orientant une déformation de la structure de stockage, lors des déformations des éléments de stockage au cours de phases de stockage et déstockage de gaz de ladite structure, de sorte à limiter les efforts appliqués sur une enceinte entourant la structure.

*Deuxième exemple*

Selon un autre exemple de mode de réalisation, il est décrit un procédé de remplissage d'une unité de stockage de gaz comprenant une enceinte 8 destinée à abriter au moins un élément de stockage de gaz par absorption ou adsorption.

Le procédé comprend une première étape consistant à placer dans ladite enceinte au moins un élément de stockage de gaz, essentiellement dépourvu de gaz.

Le procédé comprend une deuxième étape consistant à placer dans ladite enceinte, de façon adjacente à l'élément de stockage, au moins un élément compressible,

Le procédé comprend une troisième étape consistant à fermer l'enceinte et appliquer à celle-ci une source de gaz sous pression, pour stocker le gaz par adsorption dans le ou chaque élément de stockage de gaz, le ou chaque élément compressible étant adapté pour se déformer sous l'action d'efforts exercés sur lui du fait des variations de volume du ou de chaque élément de stockage au cours de ce stockage, de manière à limiter les efforts appliqués sur l'enceinte.

*Troisième exemple*

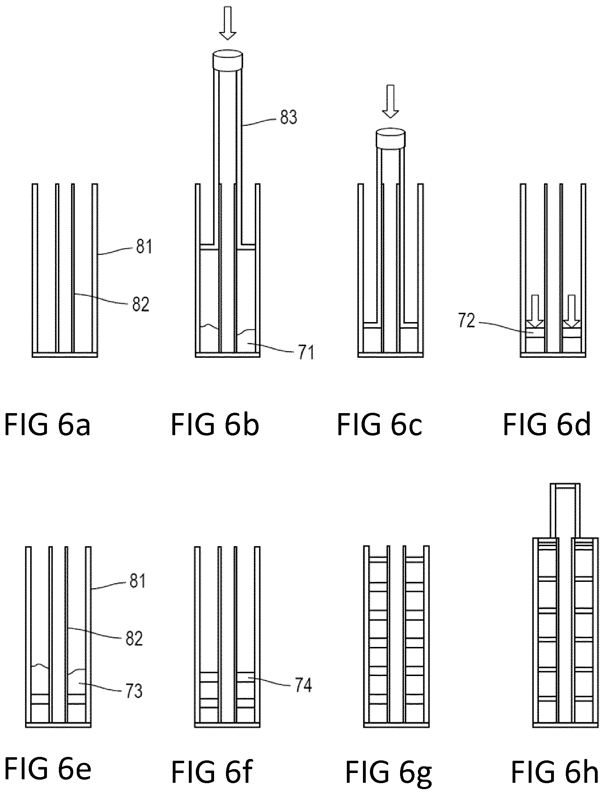

Selon un mode de réalisation particulier, en référence aux figures 6a à 6h, il est décrit un procédé de réalisation de la structure de stockage décrite dans l'enceinte.

A l'état initial, représenté figure 6a, l'enceinte est vide.

L'enceinte présente par exemple une symétrie de révolution. L'enceinte peut alors comprendre une paroi extérieure 81 cylindrique et une paroi intérieure formant un tube 82 délimitant un évidement central s'étendant le long de l'axe de symétrie de l'enceinte.

En référence à la figure 4b, le procédé comprend une première étape de dépôt d'un premier élément de stockage, par exemple d'une première couche de sel pulvérulent non compressé ou préalablement compressé dans la zone annulaire située entre la paroi extérieure de l'enceinte et la paroi du tube 82.

En référence aux figures 6b et 6c, le procédé peut comprendre une deuxième étape de mise en forme de la première couche de sel par un plongeur 83 doté d'une surface d'extrémité plane et appliquant une certaine pression sur la surface libre de la couche de sel. Cette deuxième étape permet d'obtenir une première couche de sel homogène et d'épaisseur essentiellement constante. La première couche de sel présente ainsi une symétrie de révolution de même axe que l'enceinte.

En référence à la figure 6d, dans une troisième étape, un premier élément compressible 72 est déposé sur la première couche de sel 71. L'élément compressible peut présenter les mêmes propriétés de symétrie de révolution que l'enceinte.

En référence à la figure 6e, dans une quatrième étape, un deuxième élément de stockage 73 est déposé sur le premier élément compressible 72. Il peut s'agir d'une deuxième couche de sel pulvérulent non compressé.

La figure 6f représente l'enceinte 8 après le dépôt d'une deuxième couche en un matériau compressible 74.

Comme illustré à la figure 4g, les trois premières étapes du procédé peuvent être répétées jusqu'à par exemple trente fois pour obtenir une structure de stockage stratifiée.

Il est à noter que l'on peut réaliser soit des couches de matériau de sel de stockage pur, soit des couches de sel en mélange, avec un ratio donné, avec un additif.

*Quatrième exemple*

Par ailleurs, des galettes rigides de sel peuvent être préparées à l'avance par compression ou via l'utilisation d'un liant.

On procède ensuite à l'implantation des couches de sel et des éléments compressibles par empilements successifs.

Préférentiellement, l'élément de stockage et l'élément compressible sont assemblés ou formés dans l'enceinte pour obtenir la structure de stockage en l'absence d'ammoniac.

Il est ainsi possible d'obtenir des galettes rigides formant couche en un matériau de stockage.

Un procédé de réalisation de la structure de stockage décrite dans l'enceinte selon un autre exemple de mode de réalisation utilisant de telles galettes rigides est ici décrit.

A l'état initial, l'enceinte est vide.

L'enceinte présente par exemple une symétrie de révolution. L'enceinte peut alors comprendre une paroi extérieure cylindrique et une paroi intérieure formant un tube délimitant un évidement central s'étendant le long de l'axe de symétrie de l'enceinte.

Le procédé comprend une première étape de dépôt d'une première couche en un matériau de stockage. La première couche est typiquement une galette rigide de sel pulvérulent compressé. La première couche en un matériau de stockage est typiquement déposée dans une zone annulaire située entre la paroi extérieure de l'enceinte et la paroi du tube.

Le procédé comprend une deuxième étape de dépôt d'une première couche d'un élément compressible, c'est-à-dire formant ou comprenant un élément compressible sur la première couche en un matériau de stockage. L'élément compressible est par exemple en une strate de graphite naturel expansible.

La couche en matériau compressible présente par exemple les mêmes propriétés de symétrie de révolution que l'enceinte.

Le procédé comprend une troisième étape de dépôt d'une deuxième couche en un matériau de stockage, similaire à celui de la première étape, sur la première couche d'élément compressible.

Les deux premières étapes du procédé peuvent être répétées jusqu'à trente fois pour obtenir une structure de stockage stratifiée.

*Cinquième exemple*

Selon une variante possible du procédé précédemment décrit utilisant des galettes rigides, certaines des couches peuvent être préassemblées hors de l'enceinte.

Un procédé de réalisation de la structure de stockage décrite selon un troisième exemple de mode de réalisation, utilisant de telles galettes rigides est ici décrit.

Le procédé comprend une première étape de fourniture d'une première couche en un matériau de stockage et d'une première couche d'élément compressible.

La première couche est typiquement une galette rigide de sel pulvérulent compressé. L'élément compressible est par exemple en une strate de graphite naturel expansible.

Le procédé comprend une deuxième étape de pré-assemblage de la première couche en un matériau de stockage avec la première couche d'élément compressible.

Par pré-assemblage, on entend un assemblage, typiquement partiel, réalisé en amont de l'agencement dans l'enceinte décrit précédemment, de sorte que les couches soit solidaires l'une de l'autre.

Les couches, ou des groupes donnés de couches, sont par exemple préassemblées entre elles au moyen d'une colle. Alternativement ou en complément, les couches sont par exemple assemblées entre elles par compression des couches l'une contre l'autre afin qu'elles adhèrent l'une à l'autre et/ou qu'elles s'interpénètrent au voisinage de leur interface.

Le procédé peut alors comprendre une ou plusieurs troisièmes étapes successives de pré-assemblage solidaire d'une ou de plusieurs couches en un matériau de stockage et/ou d'une ou de plusieurs couches d'élément compressible au pré-assemblage obtenu aux étapes précédentes pour former un pré-assemblage présentant une alternance telle que décrite précédemment.

Le procédé peut comprendre une quatrième étape de réalisation d'une structure de stockage dans une enceinte selon l'un des procédés décrits précédemment, comprenant en outre une étape de dépôt du pré-assemblage ainsi formé typiquement hors de l'enceinte, en tant que partie de la structure de stockage en formation.

Par formé hors de l'enceinte, on entend que les étapes de pré-assemblage ont été réalisées hors de l'enceinte.

Un tel pré-assemblage facilite le montage postérieur de la structure de stockage dans l'enceinte de stockage.

Par ailleurs un tel pré-assemblage permet une standardisation des pré-assemblages en tant qu'éléments de la matrice à monter pour former la structure dans l'enceinte. Il est ainsi possible d'obtenir des structures de stockage aux propriétés plus homogènes et donc plus prévisibles, ce qui permet un meilleur contrôle lors de leur utilisation postérieure. Notamment, on peut associer à un bloc de sel de stockage un bloc de conduction thermique assorti, optimisant ainsi les conditions de fonctionnement dans chacun des groupes pré-assemblés.

Il en résulte également une simplification de la logistique associée à l'acheminement des éléments constitutifs de la structure de stockage vers leur lieu de montage.

*Saturation en ammoniac*

Préférentiellement, au cours des procédés de réalisation, typiquement des procédés de réalisation décrits précédemment, la ou chaque couche de stockage et la ou chaque couche d'élément compressible sont assemblées ou formées dans l'enceinte pour obtenir la structure de stockage en l'absence d'ammoniac.

Selon un mode de réalisation préféré, les couches de sel ne contiennent pas d'ammoniac durant les étapes précédemment décrites.

Le procédé peut donc comprendre une étape postérieure aux étapes précédentes, dans laquelle la structure de stockage ainsi formée est saturée au moins partiellement en ammoniac.

Préférentiellement, la ou chaque couche de stockage et la ou chaque couche d'élément compressible sont formées et assemblées de telle sorte qu'un jeu subsiste entre la ou chaque couche d'élément compressible et la face intérieure de la paroi de l'enceinte.

La figure 4h représente une structure de stockage 7 complète saturée en ammoniac dans une enceinte 8 close en fonctionnement.

5) Elément compressible thermiquement conducteur

L'élément compressible peut être une couche en un matériau thermiquement conducteur afin d'augmenter les transferts thermiques au sein de la structure.

Il est ainsi possible d'améliorer le transfert de la chaleur au sein de la structure de stockage.

Par exemple, une couche comprenant ou constituée de graphite naturel expansé, possiblement compressé, peut former une couche à la fois thermiquement conductrice et compressible.

6) Structure de stockage présentant un jeu

Lors d'une étape de remplissage ou de saturation en ammoniac de la structure de stockage, l'élément de stockage, constitué par exemple d''au moins une couche de stockage se gonfle et son volume augmente. Un tel phénomène est représenté par exemple figure 4h.

L'élément compressible comprend au moins une couche en un matériau compressible. Cette couche en matériau compressible peut être déformable. L'élément compressible peut par exemple comprendre au moins une couche de matériau compressible réalisée de sorte à être déformable. Elle peut ainsi être par exemple être formée de graphite naturel expansé pré-compressé.

Ainsi, lors du remplissage en ammoniac, la ou chaque couche de stockage augmente en volume et la ou chaque couche en un matériau compressible subit des efforts qui la déforme.

La structure et l'enceinte peuvent en particulier être dimensionnées pour que cette déformation n'implique pas un changement significatif de densité de la ou chaque couche en un matériau compressible, tant qu'un espace libre dans l'enceinte permet un changement de forme à densité constante.

Lorsqu'il existe un jeu entre la paroi intérieure de l'enceinte et la ou chaque couche en un matériau compressible, cette dernière peut ainsi se déformer pour occuper un volume périphérique résultant du jeu.

La couche de matériau compressible peut ainsi se déformer jusqu'à former contact avec la paroi intérieure de l'enceinte dans la zone de jeu, par exemple la paroi périphérique.

Dans un mode de réalisation particulier, l'épaisseur de la ou chaque couche en un matériau compressible peut diminuer et son diamètre augmenter sans changement de densité, c'est-à-dire sans changement du volume total occupé par la couche.

La structure peut être dimensionnée de sorte que, lorsque tout le volume de l'intérieur de l'enceinte est occupé par la structure de stockage, ou lorsque plus aucun volume libre de l'enceinte n'est accessible à aucune couche d'un matériau compressible, la ou chaque couche de stockage n'est pas saturée en ammoniac. La poursuite du remplissage de la ou chaque couche de stockage implique une augmentation de volume supplémentaire de la ou chaque couche de stockage. Cette augmentation de volume est alors au moins partiellement compensée et/ou les efforts résultants au moins partiellement absorbés par une compression de la ou chaque couche de matériau compressible, dont la densité augmente alors.

Par exemple, le graphite naturel expansé à l'état naturel présente une densité cent fois plus faible que du graphite non expansé non poreux. Si la ou chaque couche en un matériau compressible est formé de graphite naturel expansé précompressé, par exemple sous forme d'une galette rigide, la ou chaque couche de matériau compressible pourra présenter une densité encore dix fois supérieure au graphite non expansé non poreux. Sa capacité théorique de compression est donc d'un facteur dix.

Ainsi, la structure de stockage peut être réalisée de telle sorte que les différentes couches sont maintenues en contact même lorsque la structure n'est pas saturée, voire est presque vide d'ammoniac. Par ailleurs le fait que les éléments de la structure soient maintenus évite qu'ils ne se déplacent et ne s'usent de manière anticipée par frottements ou chocs mécaniques.

Une telle structure de stockage présente l'avantage de limiter néanmoins les efforts subis par l'enceinte à l'intérieur de laquelle la structure de stockage est disposée. En effet, les efforts résultants de l'augmentation du volume de la ou chaque couche de stockage est absorbée par la ou chaque couche de matériau compressible qui change de forme à densité constante tant qu'un espace de jeu peut être occupé, puis qui est comprimé et dont la densité augmente alors lorsque tout espace de jeu accessible est occupé.

Selon un exemple de mode de réalisation, les couches de la structure de stockage peuvent être formées d'un empilement de disques, ou galettes, alternés. L'enceinte peut être de forme générale cylindrique ou conique ou présentant une section quelconque, par exemple carrée ou ovale. L'enceinte peut présenter une forme générale percée de part en part selon un axe donné. Dans le cas d'une enceinte conique ou d'une forme à section variable, les galettes présentent des diamètres de dimensions variables.

Dans un tel exemple de structure présentant un empilement de disques, la structure peut présenter une alternance d'au moins un disque formant couche de stockage et d'au moins un disque formant couche d'un matériau compressible. Les disques peuvent être prévus de telle sorte que l'épaisseur de la couche de stockage à vide soit au moins deux fois plus épaisse qu'une couche de matériau compressible adjacente à vide.

De plus les disques peuvent être prévus de sorte que le jeu entre le bord de la couche de matériau compressible et la paroi intérieure de l'enceinte qui contient la structure de stockage, c'est-à-dire l'espace de part et d'autre de la couche, soit compris entre 2% et 30%, plus préférentiellement entre par exemple 5% et 16%, du diamètre transversal de la couche (ou longueur principale équivalente en cas de structure de contour particulier) lorsque la structure de stockage est vide d'ammoniac.

Dans de tels intervalles de jeu, il est ainsi possible de limiter encore davantage les efforts appliqués à l'enceinte, la couche de matériau compressible ne comprimant substantiellement en épaisseur après que le jeu en question ait été comblé par une expansion vers l'extérieur, en maintenant les couches de la structure de stockage en contact avec ses voisines.

7) Exemple de procédé d'obtention d'une structure de stockage présentant un jeu

Selon une première étape, des couches de matériau compressible sont fournies. Une étape préalable de compression à des dimensions données, en particulier à une épaisseur donnée et/ou à une section donnée, peut permettre de fournir de telles couches à une densité souhaitée.

Selon une deuxième étape, des couches de matériau de stockage sont fournies. Ces couches peuvent être préparées par compression d'une poudre comprenant un sel pulvérulent tel que décrite précédemment. Cette compression peut être réalisée de sorte à obtenir des couches à des dimensions données, en particulier à une épaisseur donnée et/ou à une section donnée.

Selon une troisième étape, les couches de matériau de stockage et les couches de matériau compressible sont placées dans l'enceinte de sorte à former la structure de stockage sous la forme d'un empilement présentant une alternance de ces couches. Alternativement, les couches peuvent être empilées en alternance à l'extérieur de l'enceinte, les couches adhérant les unes aux autres pour former un ou plusieurs ensembles solidaires autoportants. Ce ou ces ensembles sont alors placés à l'intérieur de l'enceinte.

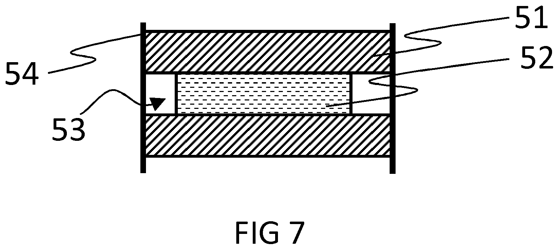

En référence à la figure 7, il est décrit une partie d'une structure de stockage dans laquelle chaque couche de matériau compressible 52 est dimensionnée par rapport à l'enceinte pour présenter un jeu 53 entre ladite couche et la paroi 54 de l'enceinte lorsque la structure n'est pas saturée en ammoniac, de sorte qu'une augmentation du volume d'une couche de stockage 51 adjacente lors d'un remplissage d'ammoniac est compensée dans une phase initiale de remplissage par une modification de la forme de la couche de matériau compressible 52 pour occuper un espace libre résultant du jeu. Ensuite, la couche de matériau compressible 52 peut le cas échéant se comprimer pour absorber la suite de l'augmentation de volume. La couche de matériau compressible, en contact intime à la fois avec la paroi de l'enceinte et avec la couche de matériau de stockage, assure un excellent transfert thermique.

**Revendications**

1. Unité de stockage de gaz par absorption ou adsorption, comprenant une enceinte (8) abritant un élément de stockage (702, 704, 502) de gaz par absorption ou adsorption, l'unité de stockage comprenant en outre un élément compressible (712, 514) également prévu dans l'enceinte (8) et maintenu en contact avec l'élément de stockage (702, 704, 502) et adapté pour se déformer sous l'action d'efforts exercés par l'élément de stockage (702, 704, 502) lors de variations de volume de l'élément de stockage (702, 704, 502) au cours de phases de stockage et déstockage de gaz, de manière à limiter les efforts appliqués sur l'enceinte (8), **caractérisée en ce que** l'unité comprend une alternance de couches comprenant une couche d'un élément de stockage et au moins une couche d'un élément compressible.

2. Unité de stockage selon la revendication 1, dans laquelle l'élément compressible (712, 514) est constitué un milieu poreux, et/ou l'élément compressible (712, 514) comprend une matrice poreuse de graphite naturel expansé.

3. Unité selon l'une des revendications 1 ou 2, comprenant

   - une série d'éléments de stockage (702, 704, 502) séparés deux à deux par des éléments compressibles (712, 714), ou.
   - une première combinaison d'un élément de stockage (502), intégré dans un élément compressible (514) de manière à être entouré par l'élément compressible (514), ou
   - une série d'éléments de stockage (502) intégrés dans un élément compressible commun (514)

4. Unité de stockage selon la revendication 3, comprenant une deuxième combinaison d'un élément compressible (514) intégré dans un élément de stockage (502) de manière à être entouré par l'élément de stockage (502).

5. Unité de stockage selon les revendications 3 et 4, comprenant une alternance de première(s) combinaison(s) et de deuxième(s) combinaison(s).

6. Unité de stockage selon l'une quelconque des revendications 1 à 5, dans laquelle l'élément compressible (712) comprend deux parties, une partie au moins étant maintenue en appui contre un élément de stockage, les deux parties étant interconnectées par un élément mécanique élastique.

7. Unité de stockage selon la revendication 6, dans laquelle l'élément mécanique élastique comprend un ressort.

8. Unité de stockage selon l'une quelconque des revendications 1 à 7, dans laquelle l'élément compressible est adapté pour se déformer avec variation de densité sous l'action d'efforts exercés par l'élément de stockage (702, 704, 502) lors de variations de volume de l'élément de stockage (702, 704, 502) au cours de phases de stockage et déstockage de gaz, de manière à limiter les efforts appliqués sur l'enceinte (8).

9. Structure de stockage de gaz par absorption ou adsorption, adaptée pour être disposée dans une enceinte (8), la structure comprenant un élément de stockage (702, 704, 502) de gaz par absorption ou adsorption, la structure comprenant en outre un élément compressible (712, 514) maintenu en contact avec l'élément de stockage (702, 704, 502) et adapté pour se déformer sous l'action d'efforts exercés par l'élément de stockage (702, 704, 502) lors de variations de volume de l'élément de stockage (702, 704, 502) au cours de phases de stockage et déstockage de gaz, **caractérisée en ce que** la structure comprend une alternance de couches comprenant une couche d'un élément de stockage et au moins une couche d'un élément compressible.

10. Système de réduction catalytique sélective pour gaz d'échappement de moteur à combustion interne, **caractérisé en ce qu'**il comprend une unité de stockage d'ammoniac selon l'une quelconque des revendications 1 à 8 et un module d'injection de l'ammoniac dans les gaz d'échappement.

11. Procédé de remplissage d'une unité de stockage de gaz comprenant une enceinte (8) destinée à abriter au moins un élément de stockage de gaz par absorption ou adsorption, le procédé comprenant les étapes suivantes :

- placer dans ladite enceinte au moins un élément de stockage de gaz, essentiellement dépourvu de gaz,
- placer dans ladite enceinte, de façon adjacente à l'élément de stockage, au moins un élément compressible,
- fermer l'enceinte et la appliquer à celle-ci une source de gaz sous pression, pour stocker le gaz par adsorption dans le ou chaque élément de stockage de gaz, le ou chaque élément compressible étant adapté pour se déformer sous l'action d'efforts exercés sur lui du fait des variations de volume du ou de chaque élément de stockage au cours de ce stockage, de manière à limiter les efforts appliqués sur l'enceinte, **caractérisé en ce que** l'unité comprend une alternance de couches comprenant une couche d'un élément de stockage et au moins une couche d'un élément compressible.

12. Procédé selon la revendication 11, dans lequel l'élément de stockage est une couche de sel pulvérulente, le procédé comprenant l'introduction du sel pulvérulent dans l'enceinte pour former un couche et une mise en forme de cette couche par un plongeur.

13. Procédé d'obtention d'une structure de stockage d'ammoniac selon la revendication 9, le procédé comprenant des étapes consistant à :

déposer une couche de stockage comprenant un sel non compressé ou préalablement compressé,
déposer une couche d'un élément compressible, ces deux étapes étant répétées pour former une structure comprenant une alternance de couches de stockage et de couche(s) de matériau compressible intercalaire(s), dans lequel la couche de stockage et la couche d'élément compressible sont pré-assemblées, les deux couches étant ensuite déposées simultanément dans l'enceinte.

14. Procédé selon la revendication 13, dans lequel le pré-assemblage est réalisé par collage et/ou compression des couches l'une contre l'autre.

**Patentansprüche**

1. Speichereinheit von Gas durch Absorption oder Adsorption, umfassend ein Gehäuse (8) mit einem Speicherelement (702, 704, 502) von Gas durch Absorption oder Adsorption, wobei die Speichereinheit ferner ein komprimierbares Element (712, 514) umfasst, das ebenfalls in dem Gehäuse (8) vorgesehen ist und mit dem Speicherelement (702, 704, 502) in Kontakt gehalten wird und angepasst ist, um sich unter der Wirkung von Kräften, die von dem Speicherelement (702, 704, 502) bei Volumenänderungen des Speicherelements (702, 704, 502) während Speicher- und Auslagerungsphasen von Gas ausgeübt werden, derart zu verformen, dass die auf das Gehäuse (8) angewendeten Kräfte begrenzt sind, **dadurch gekennzeichnet, dass** die Einheit eine Abfolge von Schichten umfasst, umfassend eine Schicht eines Speicherelements und mindestens eine Schicht eines komprimierbaren Elements.

2. Speichereinheit nach Anspruch 1, wobei das komprimierbare Element (712, 514) von einem porösen Medium gebildet ist und/oder das komprimierbare Element (712, 514) eine poröse Matrix aus expandiertem natürlichem Graphit umfasst.

3. Einheit nach einem der Ansprüche 1 oder 2, umfassend

- eine Reihe von Speicherelementen (702, 704, 502), jeweils paarweise von komprimierbaren Elementen (712, 714) getrennt, oder
- eine erste Kombination eines Speicherelements (502), integriert in ein komprimierbares Element (514) derart, dass es von dem komprimierbaren Element (514) umgeben ist, oder
- eine Reihe von Speicherelementen (502), integriert in ein gemeinsames komprimierbares Element (514).

**4.** Speichereinheit nach Anspruch 3, umfassend eine zweite Kombination eines komprimierbaren Elements (514), integriert in ein Speicherelement (502) derart, dass es von dem Speicherelement (502) umgeben ist.

**5.** Speichereinheit nach den Ansprüchen 3 und 4, umfassend eine Abfolge erster Kombination(en) und zweiter Kombination(en).

**6.** Speichereinheit nach einem der Ansprüche 1 bis 5, wobei das komprimierbare Element (712) zwei Teile umfasst, wobei mindestens ein Teil abgestützt auf ein Speicherelement gehalten wird, wobei die zwei Teile von einem elastischen mechanischen Element miteinander verbunden sind.

**7.** Speichereinheit nach Anspruch 6, wobei das elastische mechanische Element eine Feder umfasst.

**8.** Speichereinheit nach einem der Ansprüche 1 bis 7, wobei das komprimierbare Element angepasst ist, um sich mit Dichtigkeitsänderung unter der Wirkung von Kräften, die von dem Speicherelement (702, 704, 502) bei Volumenänderungen des Speicherelements (702, 704, 502) während Speicher- und Auslagerungsphasen von Gas ausgeübt werden, derart zu verformen, dass die auf das Gehäuse (8) angewendeten Kräfte begrenzt sind.

**9.** Speicherstruktur von Gas durch Absorption oder Adsorption, die angepasst ist, um in einem Gehäuse (8) angeordnet zu sein, wobei die Struktur ein Speicherelement (702, 704, 502) von Gas durch Absorption oder Adsorption umfasst, wobei die Struktur ferner ein komprimierbares Element (712, 514) umfasst, das mit dem Speicherelement (702, 704, 502) in Kontakt gehalten wird und angepasst ist, um sich unter der Wirkung von Kräften, die von dem Speicherelement (702, 704, 502) bei Volumenänderungen des Speicherelements (702, 704, 502) während Speicher- und Auslagerungsphasen von Gas ausgeübt werden, zu verformen, **dadurch gekennzeichnet, dass** die Struktur eine Abfolge von Schichten umfasst, umfassend eine Schicht eines Speicherelements und mindestens eine Schicht eines komprimierbaren Elements.

**10.** System der selektiven katalytischen Reduktion für ein Auspuffgas eines Verbrennungsmotors, **dadurch gekennzeichnet, dass** es eine Ammoniakspeichereinheit nach einem der Ansprüche 1 bis 8 und ein Einspritzmodul des Ammoniaks in die Auspuffgase umfasst.

**11.** Verfahren zum Befüllen einer Speichereinheit von Gas, umfassend ein Gehäuse (8), das bestimmt ist, mindestens ein Speicherelement von Gas durch Absorption oder Adsorption aufzunehmen, wobei das Verfahren die folgenden Schritte umfasst:

- Platzieren, in das Gehäuse, mindestens eines Speicherelements von Gas, im Wesentlichen ohne Gas,
- Platzieren, in das Gehäuse, neben das Speicherelement, mindestens eines komprimierbaren Elements,
- Schließen des Gehäuses und Anwenden auf dieses einer Quelle von Gas unter Druck, um das Gas durch Adsorption in dem oder jedem Speicherelement von Gas zu speichern, wobei das oder jedes komprimierbare Element angepasst ist, um sich unter der Wirkung von Kräften, die auf es aufgrund der Volumenänderungen des oder jedes Speicherelement während dieser Speicherung ausgeübt werden, derart zu verformen, dass die auf das Gehäuse angewendeten Kräfte begrenzt sind,
**dadurch gekennzeichnet, dass** die Einheit eine Abfolge von Schichten umfasst, umfassend eine Schicht eines Speicherelements und mindestens eine Schicht eines komprimierbaren Elements.

**12.** Verfahren nach Anspruch 11, wobei das Speicherelement eine Schicht eines pulverförmigen Salzes ist, wobei das Verfahren die Einleitung des pulverförmigen Salzes in das Gehäuse umfasst, um eine Schicht zu bilden, und eine Formung dieser Schicht durch einen Plunger.

**13.** Verfahren zum Erhalten einer Ammoniak-Speicherstruktur nach Anspruch 9, wobei das Verfahren die Schritte umfasst, die darin bestehen:

Ablegen einer Speicherschicht, die ein nicht komprimiertes oder zuvor komprimiertes Salz umfasst,
Ablegen einer Schicht eines komprimierbaren Elements,
wobei diese beiden Schritte wiederholt werden, um eine Struktur zu bilden, die eine Abfolge von Speicherschichten und von Schicht(en) zwischengestellten komprimierbaren Materials umfasst,
wobei die Speicherschicht und die Schicht komprimierbaren Elements vorverbunden sind, wobei die zwei Schichten dann gleichzeitig im Gehäuse abgelegt werden.

**14.** Verfahren nach Anspruch 13, wobei die Vorverbindung durch Kleben und/oder Kompression der Schichten gegeneinander durchgeführt wird.

**Claims**

**1.** A unit for storing gas by absorption or adsorption, including a container (8) harboring a storage element (702, 704, 502) of gas by absorption or adsorption, the storage unit further including a compressible element (712, 514) also provided in the container (8) and maintained in contact with the storage element (702, 704, 502) and adapted so as to deform under the action of forces exerted by the storage element (702, 704, 502) during volume variations of the storage element (702, 704, 502) during phases for storing and discharging gas, so as to limit the forces applied on the container (8), **characterized in that** the unit includes an alternation of layers including a layer of a storage element and at least one layer of a compressible element.

**2.** The storage unit according to claim 1, wherein the compressible element (712, 514) consists of a porous medium, and/or the compressible element (712, 514) includes a porous matrix of expanded natural graphite.

**3.** The unit according to any of claim 1 or 2, including

- a series of storage elements (702, 704, 502) separated two by two with compressible elements (712, 714), or
- a first combination of a storage element (502), integrated into a compressible element (514) so as to be surrounded by the compressible element (514), or
- a series of storage elements (502) integrated into a common compressible element (514).

**4.** The storage unit according to claim 3, including a second combination of a compressible element (514) integrated into a storage element (502) so as to be surrounded by the storage element (502).

**5.** The storage unit according to claims 3 and 4, including an alternation of first combination(s) and of second combination(s).

**6.** The storage unit according to any of claims 1 to 5, wherein the compressible element (712) includes two parts, at least one part being maintained bearing against a storage element, both part being interconnected through an elastic mechanical element.

**7.** The storage unit according to claim 6, wherein the elastic mechanical element includes a spring.

**8.** The storage unit according to any of claims 1 to 7, wherein the compressible element is adapted so as to deform with variation of density under the action of forces exerted by the storage element (702, 704, 502) during volume variations of the storage element (702, 704, 502) during phases for storing and discharging gas, so as to limit the forces applied on the container (8).

**9.** A structure for storing gas by absorption or adsorption, adapted so as to be positioned in a container (8), the structure including a storage element (702, 704, 502) of gas by absorption or adsorption, the structure further including a compressible element (712, 514) maintained in contact with the storage element (702, 704, 502) and adapted so as to deform under the action of forces exerted by the storage element (702, 704, 502) during volume variations of the storage element (702, 704, 502) during phases for storing and discharging gas, **characterized in that** the structure includes an alternation of layers including a layer of a storage element and at least one layer of a compressible element.

**10.** A selective catalytic reduction system for exhaust gases of an internal combustion engine, **characterized in that** it includes a unit for storing ammonia according to any of claims 1 to 8 and a module for injecting ammonia into the exhaust gases.

**11.** A method for filling a gas storage unit including a container (8) intended to harbor at least one element for storing gas by absorption or adsorption, the method including the following steps:

- placing in said container at least one gas storage element, essentially without any gas,
- placing into said container, adjacent to the storage element, at least one compressible element,

- closing the container and applying to the latter a source of pressurized gas, in order to store the gas by adsorption in the or each gas storage element, the or each compressible element being adapted so as to deform under the action of forces exerted on it because of the volume variations of the or each storage element during this storing, so as to limit the forces applied on the container, **characterized in that** the unit includes an alternation of layers including a layer of a storage element and at least one layer of a compressible element.

12. The method according to claim 11, wherein the storage element is a layer of powdery salt, the method including the introduction of the powdery salt into the container so as to form a layer and shaping of this layer by a plunger.

13. A method for obtaining a structure for storing ammonia according to claim 9, the method including the steps of:

depositing a storage layer including a non-compressed or pre-compressed salt,
depositing a layer of a compressible element,
both of these steps being repeated so as to form a structure including an alternation of storage layers and of intercalary compressible material layer(s),
wherein the storage layer and the compressible element layer are pre-assembled, both layers then being deposited in the container simultaneously.

14. The method according to claim 13, wherein the pre-assembling is achieved by adhesive bonding and/or compressing the layers against each other.

FIG 1

FIG 2a

FIG 2b

0% NH3    0% NH3

712

704

FIG 3a

100% NH3    100% NH3

712

704

FIG 3b

FIG 4a

702
712
704

FIG 4b

702
712
704

FIG 4c

702
712
704

FIG 5a

514
502

FIG 5b

502
514

FIG 5c

502
514

FIG 6a   FIG 6b   FIG 6c   FIG 6d

FIG 6e   FIG 6f   FIG 6g   FIG 6h

FIG 7

**EP 2 890 875 B1**